# EUROPEAN PATENT APPLICATION

(11) **EP 4 415 231 A1**
(43) Date of publication of application: **14.08.2024**
(21) Application number: 23212067.5
(22) Date of filing: 24.11.2023
(51) Int. Cl.: H02K 3/34, H02K 3/40, H02K 9/22, H02K 15/12, H02K 3/30

(54) **THERMAL MANAGEMENT IN ELECTRIC MACHINES USING NEAR NET SHAPE FORMATION OF SILICON CARBIDE POTTING MATERIAL**

(30) Priority: 13.02.2023 US 202318168292
(71) Applicant: Honeywell International Inc., Charlotte, NC 28202 (US)
(72) Inventor: MOHAJERI, Mahdi, Charlotte, 28202 (US); MEHR, Mehrad, Charlotte, 28202 (US); JADIDIAN, Bahram, Charlotte, 28202 (US)
(74) Representative: LKGlobal UK Ltd.

(57) **Abstract**

A method is provided. The method includes: forming a stator for a high-power density electric machine, the stator having a plurality of slots for receiving stator coils and having a back-iron; inserting the stator coils in the plurality of slots; and inserting a potting material in the plurality of slots of the stator, the potting material in thermal contact with adjacent stator coils and in thermal contact with the back-iron; wherein the potting material is formed by: mixing silicon carbide particles with a silicon carbide preceramic polymer to form a mixture; diluting the mixture with solvents to form a slurry; drying the slurry to form a paste; forming the paste into a shape; and firing the paste to form a ceramic material.

## Description

### BACKGROUND

This invention was made with Government support under ARPA-E grant number DE-AR0001354 awarded by U.S. Department of Energy. The Government has certain rights in the invention.

During the last several years, the demand for systems that generate power in the 200kW to 1,000 kW range (so-called "high power") has increased dramatically. Much of this demand is driven by the increased electrification in aerospace applications and hybrid electric propulsion for aerospace and ground vehicles. Heat generation due to different types of losses in such a high-power electric machine is inevitable. The losses turn to heat and cause an increase in the temperature of stator coils, stator, rotor, and housing thereby decreasing the performance and efficiency of the electric machine.

Thus, there is a need in the art for improved thermal management to enable cost effective and higher efficiency operation of electric machines at elevated temperature.

### SUMMARY

A method is provided. The method includes: forming a stator for a high-power density electric machine, the stator having a plurality of slots for receiving stator coils and having a back-iron; inserting the stator coils in the plurality of slots; and inserting a potting material in the plurality of slots of the stator, the potting material in thermal contact with adjacent stator coils and in thermal contact with the back-iron; wherein the potting material is formed by: mixing silicon carbide particles with a silicon carbide preceramic polymer to form a mixture; diluting the mixture with solvents to form a slurry; drying the slurry to form a paste; forming the paste into a shape; and firing the paste to form a ceramic material.

### BRIEF DESCRIPTION OF THE DRAWINGS

Embodiments of the present invention can be more easily understood and further advantages and uses thereof more readily apparent, when considered in view of the description of the preferred embodiments and the following figures in which:
FIG. 1 is a cross-section of a portion of one embodiment of a stator for an electric machine that uses a silicon carbide potting material formed using near net shape manufacturing to provide thermal management for the electric machine.
FIG. 2 is a flow chart of one embodiment of a process for forming a stator for an electric machine with a silicon carbide potting material formed using near net shape manufacturing to provide thermal management for the electric machine.
FIG. 3 is a process flow diagram of one embodiment of a part of a manufacturing process for near net shape formation of a silicon carbide potting material that enables thermal management of an electric machine.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be used and that logical, mechanical and electrical changes may be made without departing from the scope of the present invention. The following detailed description is, therefore, not to be taken in a limiting sense.

Embodiments of the present invention provide thermal management of high-power density electric machines by employing a substitute for conventional potting material in the slots of a stator of the electric machine. Embodiments of the potting material comprise a silicon carbide based ceramic that has high thermal conductivity to conduct heat generated in stator coils to the back-iron of the electric machine. The silicon carbide ceramic provides sufficiently high electrical resistance at a low cost with an efficient production method to improve transfer of heat generated in the stator coils to the back-iron. This thermal management provided by the potting material increases the efficiency of the electric machine by operating under higher current density while decreasing reliance on complex cooling systems.

Embodiments of the present invention enable a vehicle, such as an aircraft, to operate an all-electric powertrain with net-zero carbon emissions. Embodiments of the present invention offer one solution to achieve a benchmark of a fully integrated all-electric powertrain system at a power density of more than 12 kW/kg and with an efficiency at more than 93%.

Embodiments of the present invention use a process that takes advantage of a new material application and a new processing method for near net shape manufacturing or formation of silicon carbide solid bodies. These solid bodies have acceptable mechanical properties and superior thermal properties and can be used for potting applications in electric machines. The process uses a preceramic polymer and a particular particle size distribution of silicon carbide powders to form very high solid loading pastes. The pyrolysis of the preceramic polymer results in a silicon carbide matrix for the silicon carbide powders. This further enables near net shape firing of the paste, typically in a temperature range from 700 to 1500°C, to form potting material which can be inserted into the cavities of an electric machine. The low processing cost as well as the ability to eliminate subsequent machining of the very hard ceramics makes this a viable option for this potting application.

In other embodiments, the pyrolysis of the preceramic material and silicon carbide particles is carried out at lower temperatures such as between 600 and 700°C. This enables the near net shape silicon carbide paste to be co-fired with the stator of the electric machine, resulting in a potting material with intimate contact and improved thermal conduction.

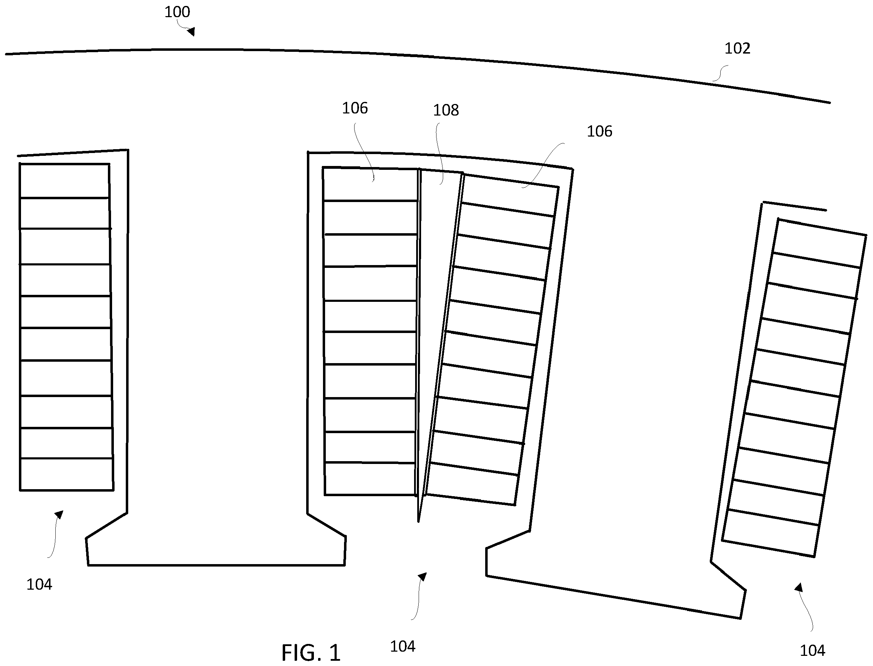

FIG. 1 is a cross-section of a portion of one embodiment of a stator, indicated generally at 100, for a high-power density electric machine that uses a silicon carbide potting material 108 formed using a near net shape manufacturing process to provide thermal management for the electric machine. Stator 100 includes back-iron 102 and a plurality of slots 104. Within each of the plurality of slots 104, stator 100 includes stator coils 106. In this embodiment, each of the plurality of slots 104 receives two stacks of stator coils 106 that have a rectangular cross-section. In other embodiments, stator coils with other appropriate shapes and locations in the slots are used. Because stator 100 has a circular cross-section, there is a space, gap or cavity between adjacent stacks of stator coils 106 in slot 104. Although only shown between stator coils 106, potting material 108 can be disposed in any space, gap or cavity between any appropriate portion of stator coils 106 and the body of stator 100. Potting material 108 is inserted in the space, gap or cavity in each of the plurality of slots 104.

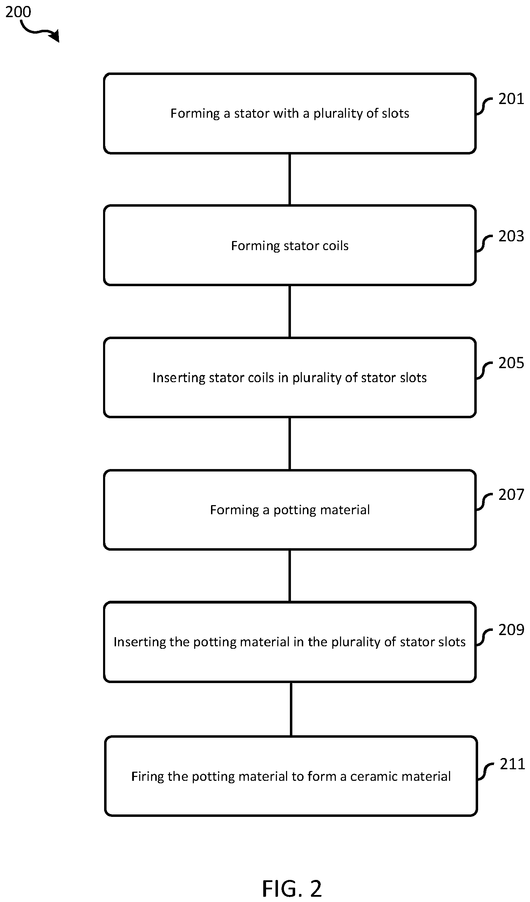

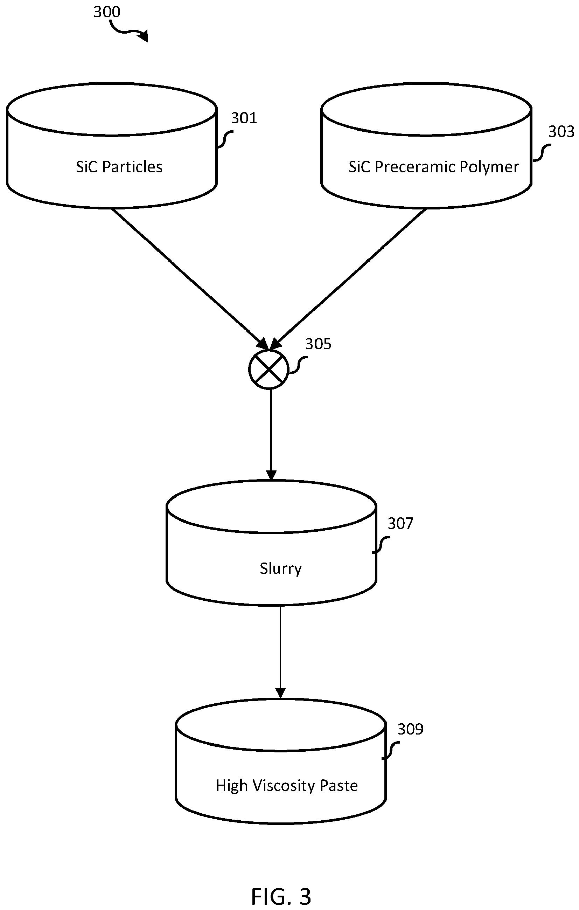

Advantageously, potting material 108 is formed using a near net shape manufacturing process such as the process described below with respect to FIGs. 2 and 3 to produce a silicon carbide based ceramic in thermal contact with the stator and adjacent stator coils. The potting material 108 has a high thermal conductivity to conduct heat generated in stator coils 106 to the back-iron 102 of the stator 100 of the electric machine.

FIG. 2 is a flow chart of one embodiment of a process, indicated at 200, for forming a stator, such as stator 100 of FIG. 1, for an electric machine. The stator formed by process 200 includes a silicon carbide potting material formed using near net shape manufacturing to provide thermal management for the electric machine. Process 200 depicts a number of blocks, each associated with one or more acts to be performed in furtherance of process 200. It is understood that the sequence of blocks may occur in an order different from the sequence shown in FIG. 2. Furthermore, in other embodiments, the acts associated with one or more of the various blocks of process 200 may even be performed in parallel with the acts associated with one or more of the other blocks of process 200. Hence embodiments of the present invention are not limited to the specific sequence of blocks set out in FIG. 2.

Process 200 includes forming a stator with a plurality of slots at block 201. As shown in FIG. 1, stator 100 is formed with a circular cross-section (only a portions of which is shown in FIG. 1 for simplicity and clarity of explanation) with a back-iron 102 and a plurality of slots 104. At block 203, a plurality of stator coils is formed. In FIG. 1, this includes formation of stator coils 106. These stator coils are inserted in slots of the stator at block 205. As shown in FIG 1, stator coils 106 are disposed in the plurality of slots 104 in stacks. In this embodiment, at least two stacks of stator coils 106 is included in each of the plurality of slots 104.

Process 200 also include forming a potting material at 207, such as potting material 108 of stator 100 of FIG. 1. In one embodiment, the potting material is formed from a combination of silicon carbide particles and a silicon carbide preceramic polymer. This potting material enables improved thermal management compared to conventional potting materials in slots of stators in high-power density electric machines. One embodiment of a process flow for forming the potting material is shown in FIG. 3 and the description of the process of FIG. 3 is provided below. Embodiments of the process for forming the potting material uses a preceramic polymer, such as Allylhydridopolycarbosilane (AHPCS) commercially available under the name SMP-10 or other similar preceramic polymers, and a particular particle size distribution of silicon carbide powders, such as bimodal and trimodal distributions or other distributions that result in high packing factors, to form very high solid loading pastes. These pastes are mixtures having, for example, up to 70 vol% of silicon carbide or can be mixtures that can be pressed into preforms that have, for example, up to 75 vol% of silicon carbide powders.

At block 209, process 200 inserts the potting material in the plurality of slots of the stator. The potting material, such as potting material 108, is inserted into gaps, spaces or cavities around stator coils 106 in slots 104 of stator 100. The potting material is fired to form a ceramic material at block 211.

In one embodiment, the potting material is inserted or packed into the gaps, spaces or cavities in a paste form prior to firing at block 211. In this embodiment, the paste is fired at a lower temperature, e.g., 600 to 700°C, so that the paste and the stator are fired simultaneously and the potting material is finalized after the paste is in place in the slots 104 of the stator 100. This near net shape manufacturing process enables the silicon carbide paste to be co-fired with the stator of the electric machine, resulting in a potting material with intimate thermal contact with the stator back-iron 102 and the adjacent stator coils 106, thus providing significant improvements in thermal conduction.

In other embodiments, the potting material is inserted in the gaps, spaces or cavities at block 209 in a final form, e.g., after firing at block 211. In this embodiment, the paste is formed into a near net shape to fit into the spaces, gaps or cavities in the slots 104 at block 207. In some embodiments, this includes forming the paste into a wedge shape that is approximately the size and shape needed to fit into a wedge-shaped region between stacks of stator coils such as shown in FIG. 1 at 108. In other embodiments, the paste is formed into other appropriate shapes to fit into gaps, spaces and cavities in the slots of the stator. The paste is then fired at block 211. Because the paste is fired prior to insertion into the slots of the stator in this embodiment, the paste can be fired at a higher temperature, e.g., in the range from 700 to 1500°C. The potting material thus formed is inserted into the plurality of slots 104 at block 209. Advantageously, by using near net shape formation of the potting material, the potting material is inserted into the spaces, gaps or cavities in the slots without any need for further processing of the shape of the potting material.

FIG. 3 is a process flow diagram of one embodiment of a part of a manufacturing process, indicated at 300, for near net shape production of a silicon carbide potting material that enables improved thermal management of an electric machine. Process 300 starts with silicon carbide particles 301 and a silicon carbide based preceramic polymer 303 such as Allylhydridopolycarbosilane (AHPCS) commercially available under the name SMP-10 or other similar preceramic polymers. The silicon carbide particles 301 and the silicon carbide based preceramic polymer 303 are mixed at 305 to form a mixture. The mixture is further diluted with solvents, such as Tetrahydrofuran (THF), Hexane, Xylene, and the like, at 305 resulting in a slurry 307. The slurry 307 is then dried to produce a high viscosity paste 309. The parameters used for drying depend on the application and can be optimized for a particular potting application. But generally, the slurry is dried until enough of the added solvent has evaporated to achieve a volume that yields the near net shape part discussed herein. The viscosity can be determined on the amount of preceramic polymer used. And can be optimized depending on how materials will be used, whether poured, pressed, injected, etc. As discussed above, the paste produced by process 300 is turned into the potting material for the electric machine by firing the paste. This can be done after forming the paste into a near net shape for the spaces, gaps or cavities to be filled. Alternatively, the paste can be inserted into the spaces, gaps and cavities in the slots 104 and then fired (at a lower temperature) to produce the potting material with acceptable thermal properties as described above.

The thermal conductivity of the potting material 108 in the slots 104 of stator 100 varies with the operating temperature of the electric machine. Also, the thermal conductivity of the potting material 108 varies based on the temperature used in firing or sintering the paste 309 used to produce the potting material 108. It is contemplated that the specific firing or sintering temperature will be determined based on the specific operating requirements of the stator 100 with sintering temperature typically falling in the range from 700 to 1500°C. It is noted, however, that sintering of the paste at temperatures as low as 600°C can be used in some embodiments. One advantage of sintering at lower temperatures is that the potting material can be inserted into the spaces, gaps and cavities of stator 100 to be co-fired with the stator itself. Finally, when a stator has an operating temperature around 400°C, the thermal conductivity of the potting material of the embodiments of the present invention may range between 8 and 22 W/mK depending on the sintering temperature. Thus, a desired parameter (thermal conductivity) of the potting material may be controlled by proper selection of the sintering temperature.

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a method comprising: forming a stator for a high-power density electric machine, the stator having a plurality of slots for receiving stator coils and having a back-iron; inserting the stator coils in the plurality of slots; and inserting a potting material in the plurality of slots of the stator, the potting material in thermal contact with adjacent stator coils and in thermal contact with the back-iron; wherein the potting material is formed by: mixing silicon carbide particles with a silicon carbide preceramic polymer to form a mixture; diluting the mixture with solvents to form a slurry; drying the slurry to form a paste; forming the paste into a shape; and firing the paste to form a ceramic material.

Example 2include the method of example 1, wherein firing the paste comprises firing the paste after the potting material is inserted into the plurality of slots of the stator.

Example 3 includes the method of any of examples 1 and 2, wherein firing the paste comprises firing the paste before the potting material is inserted into the plurality of slots of the stator.

Example 4 includes the method of any of examples 1 to 3, wherein firing the paste comprises firing the paste at a temperature in a range from 600 to 1500°C.

Example 5 includes the method of any of examples 1 to 4, wherein forming the paste into the shape comprises forming the paste into a wedge shape to fit between stacks of stator coils in the plurality of slots.

Example 6 includes the method of any of examples 1 to 5, wherein forming the paste into the shape comprises inserting the paste into a wedge-shaped region between stacks of stator coils in the plurality of slots.

Example 7 includes the method of any of examples 1 to 6, wherein forming the paste into a shape comprises forming the paste into a plurality of wedges, wherein each of the plurality of wedges is approximately a size and a shape of a cavity between stator coils in one of the plurality of slots.

Example 8 include the method of any of examples 1 to 7, wherein mixing the silicon carbide particles with the silicon carbide preceramic polymer comprises mixing the silicon carbide particles with Allylhydridopolycarbosilane.

Example 9 includes an electric machine, comprising: a stator having a plurality of slots for receiving stator coils and having a back-iron; a plurality of stator coils inserted in the plurality of slots; and a silicon carbide potting material disposed in the plurality of slots, the silicon carbide potting material in thermal contact with adjacent stator coils and in thermal contact with the back-iron, the silicon carbide potting material formed using a near net shape manufacturing process.

Example 10 includes the electric machine of example 9, wherein the silicon carbide potting material is formed from silicon carbide particles mixed with a silicon carbide preceramic polymer to form a slurry that is dried to form a high viscosity paste and shaped to fill a cavity in each of the plurality of slots.

Example 11 includes the electric machine of example 10, wherein the silicon carbide potting material is fired before being disposed in the plurality of slots.

Example 12 includes the electric machine of example 10, wherein the silicon carbide potting material is fired after being disposed in the plurality of slots.

Example 13 includes the electric machine of any of examples 10 to 12, wherein the silicon carbide potting material is fired at a temperature between 600 and 1500°C.

Example 14 includes the electric machine of any of examples 10 to 13, wherein the high viscosity paste is packed into the cavity in each of the plurality of slots.

Example 15 includes a method comprising: mixing silicon carbide particles with a silicon carbide preceramic polymer to form a mixture; diluting the mixture with solvents to form a slurry; drying the slurry to form a paste; forming the paste into a shape; forming a stator for a high-power density electric machine, the stator having a plurality of slots for receiving stator coils and having a back-iron; inserting the stator coils in the plurality of slots; packing the paste in the plurality of slots of the stator, the paste in thermal contact with adjacent stator coils and in thermal contact with the back-iron; and firing the paste at between 600 and 1500°C to form a ceramic, silicon carbide potting material.

Example 16 includes the method of example 15, wherein firing the paste comprises firing the paste after packing the paste in the plurality of slots of the stator.

Example 17 includes the method of example 15, wherein firing the paste comprises firing the paste before the paste is inserted into the plurality of slots of the stator.

Example 18 includes the method of any of examples 15 and 16, and further comprising forming the paste into a wedge shape to fit between stacks of stator coils in the plurality of slots prior to packing the paste into the plurality of slots of the stator.

Example 19 includes the method of example 15, wherein packing the paste in the plurality of slots of the stator comprises inserting the paste into a wedge-shaped region between stacks of stator coils in the plurality of slots.

Example 20 includes the method of any of examples 15 to 19, wherein mixing the silicon carbide particles with the silicon carbide preceramic polymer comprises mixing the silicon carbide particles with Allylhydridopolycarbosilane.

## Claims

1. An electric machine, comprising:
a stator (100) having a plurality of slots (104) for receiving stator coils (106) and having a back-iron (102);
a plurality of stator coils inserted in the plurality of slots; and
a silicon carbide potting material (108) disposed in the plurality of slots, the silicon carbide potting material in thermal contact with adjacent stator coils and in thermal contact with the back-iron, the silicon carbide potting material formed using a near net shape manufacturing process.

2. The electric machine of claim 9, wherein the silicon carbide potting material is formed from silicon carbide particles mixed with a silicon carbide preceramic polymer to form a slurry that is dried to form a high viscosity paste and shaped to fill a cavity in each of the plurality of slots.

3. The electric machine of claim 1, wherein the silicon carbide potting material is fired before being disposed in the plurality of slots.

4. The electric machine of claim 1, wherein the silicon carbide potting material is fired after being disposed in the plurality of slots.

5. A method comprising:
mixing (305) silicon carbide particles (301) with a silicon carbide preceramic polymer (303) to form a mixture;
diluting the mixture with solvents to form a slurry (307);
drying the slurry to form a past (309)e;
forming the paste into a shape (207);
forming a stator for a high-power density electric machine, the stator having a plurality of slots for receiving stator coils and having a back-iron (201);
inserting the stator coils in the plurality of slots (205);
packing the paste in the plurality of slots of the stator, the paste in thermal contact with adjacent stator coils and in thermal contact with the back-iron (207); and
firing the paste at between 600 and 1500°C to form a ceramic, silicon carbide potting material (211).

6. The method of claim 5, wherein firing the paste comprises firing the paste after packing the paste in the plurality of slots of the stator.

7. The method of claim 5, wherein firing the paste comprises firing the paste before the paste is inserted into the plurality of slots of the stator.

8. The method of claim 5, and further comprising forming the paste into a wedge shape to fit between stacks of stator coils in the plurality of slots prior to packing the paste into the plurality of slots of the stator.

9. The method of claim 5, wherein packing the paste in the plurality of slots of the stator comprises inserting the paste into a wedge-shaped region between stacks of stator coils in the plurality of slots.

10. The method of claim 5, wherein mixing the silicon carbide particles with the silicon carbide preceramic polymer comprises mixing the silicon carbide particles with Allylhydridopolycarbosilane.
